# EUROPEAN PATENT SPECIFICATION

(11) **EP 2 508 583 B1**
(45) Date of publication and mention of the grant of the patent: **31.08.2016**
(21) Application number: 10834567.9
(22) Date of filing: 01.12.2010
(51) Int. Cl.: C09J 151/00, C08F 265/06, C09J 7/02, C09J 11/06

(54) **PHOTOCURABLE PRESSURE-SENSITIVE ADHESIVE COMPOSITION, PHOTOCURABLE PRESSURE-SENSITIVE ADHESIVE LAYER, AND PHOTOCURABLE PRESSURE-SENSITIVE ADHESIVE SHEET**
LICHTHÄRTBARE UND DRUCKEMPFINDLICHE HAFTKLEBEZUSAMMENSETZUNG, LICHTHÄRTBARE UND DRUCKEMPFINDLICHE HAFTKLEBESCHICHT SOWIE LICHTHÄRTBARE UND DRUCKEMPFINDLICHE HAFTKLEBEFOLIE
COMPOSITION ADHÉSIVE PHOTODURCISSABLE, COUCHE ADHÉSIVE PHOTODURCISSABLE, ET FEUILLE ADHÉSIVE PHOTODURCISSABLE

(30) Priority: 03.12.2009 JP 2009275842
(43) Date of publication of application: 10.10.2012
(73) Proprietor: Nitto Denko Corporation, Ibaraki-shi Osaka 567-8680 (JP)
(72) Inventor: FUJITA,Shigeru, Ibaraki-shi Osaka 567-8680 (JP); MOROISHI,Yutaka, Ibaraki-shi Osaka 567-8680 (JP); NAKANO,Fumiko, Ibaraki-shi Osaka 567-8680 (JP); INOUE,Tetsuo, Ibaraki-shi Osaka 5678680 (JP)
(74) Representative: Hoffmann Eitle
(86) International application number: PCT/JP2010/071475
(87) International publication number: WO 2011/068117

(56) References cited:
- EP-A1- 2 549 303
- JP-A- 6 041 506
- JP-A- 11 043 660
- JP-A- 11 116 903
- JP-A- 63 260 978
- JP-A- 2003 147 311
- JP-A- 2006 104 328
- JP-A- 2008 174 667

## Description

### TECHNICAL FIELD

The invention relates to a photocurable pressure-sensitive adhesive composition, a photocurable pressure-sensitive adhesive layer, and a photocurable pressure-sensitive adhesive sheet including a support and such a photocurable pressure-sensitive adhesive layer formed on at least one side of the support.

### BACKGROUND ART

In recent years, pressure-sensitive adhesives have been used to bond, to a liquid crystal cell, an optical member such as a polarizing plate or a retardation plate for use in an electronic part such as a liquid crystal display device. Acryl-based pressure-sensitive adhesives have been widely used as such pressure-sensitive adhesives, because they have a high level of heat resistance and light resistance.

Unfortunately, acryl-based pressure-sensitive adhesives have not been able to exhibit high peeling resistance like adhesives do.

A thermosetting adhesive sheet capable of being cured by heat treatment has also been proposed for applications where electronic parts etc. are bonded. Such a thermosetting adhesive has a high level of adhering strength and heat resistance but has no tackiness for adhesion at room temperature, which makes it difficult to achieve temporary bonding. In addition, before curing, the adhesive component contains a relatively large amount of a low molecular weight component, which may cause a problem such as oozing during bonding. Therefore, there has been a demand for an adhesive sheet that can exhibit moderate adherability to serve as a pressure-sensitive adhesive at the initial stage of bonding to the adherend and can also exhibit tackiness and heat resistance as high as those of an adhesive after bonding.

For example, there has been proposed a curable thermo-bonding sheet including an acrylic polymer, an epoxy group-containing resin, a photo-initiator, and a tackifier resin (Patent Document 1). Unfortunately, such a sheet contains a low molecular weight epoxy resin, and therefore, it is difficult to prevent oozing and the like when temporary bonding is performed using such a sheet.

### PRIOR ART DOCUMENT

### Patent Document

Patent Document 1: Japanese Patent Application Laid-Open (JP-A) No. 10-140095

### SUMMARY OF THE INVENTION

### PROBLEMS TO BE SOLVED BY THE INVENTION

An objective of the present invention is to provide a photocurable pressure-sensitive adhesive composition that has heat resistance and does not cause oozing or the like at room temperature and atmospheric pressure, has a sufficient initial adhesive power when dried and crosslinked, can be easily cured by light irradiation, and can form a pressure-sensitive adhesive layer having high peeling resistance.

Another objective of the present invention is to provide a photocurable pressure-sensitive adhesive layer and a photocurable pressure-sensitive adhesive sheet each formed using such a photocurable pressure-sensitive adhesive composition.

### MEANS FOR SOLVING THE PROBLEMS

As a result of earnest studies to solve the above problems, the inventors have found the photocurable pressure-sensitive adhesive composition described below and accomplished the invention.

Specifically, the present invention is directed to a photocurable pressure-sensitive adhesive composition, including:
a graft polymer comprising a (meth)acryl-based polymer containing 0.2 to 10% by weight of a hydroxyalkyl(meth)acrylamide monomer unit, and a chain that contains a cyclic ether group-containing monomer component that is graft-polymerized onto the (meth)acryl-based polymer; and
a cationic photopolymerization initiator.

The graft polymer preferably comprises the (meth)acryl-based polymer and a chain that has the cyclic ether group-containing monomer component and another monomer component and is graft-polymerized onto the (meth)acryl-based polymer.

The photocurable pressure-sensitive adhesive composition of the present invention preferably further comprises a crosslinking agent.

In the photocurable pressure-sensitive adhesive composition of the above, the cyclic ether group-containing monomer is preferably one or both of an epoxy group-containing monomer and an oxetane group-containing monomer.

In the above-mentioned photocurable pressure-sensitive adhesive composition, the (meth)acryl-based polymer preferably has a glass transition temperature of 250 K or less.

In the above-mentioned photocurable pressure-sensitive adhesive composition, the graft polymer is preferably obtained by graft polymerization of 2 to 50 parts by weight of the cyclic ether group-containing monomer, and 5 to 50 parts by weight of another monomer in the presence of 0.02 to 5 parts by weight of a peroxide onto 100 parts by weight of the (meth)acryl-based polymer.

In the above-mentioned photocurable pressure-sensitive adhesive composition, the cationic photopolymerization initiator is preferably at least one selected from the group consisting of an allylsulfonium hexafluorophosphate salt, a sulfonium hexafluorophosphate salt, and bis(alkylphenyl)iodonium hexafluorophosphate.

The present invention further relates to a photocurable pressure-sensitive adhesive layer, comprising a crosslinking product of the above-mentioned photocurable pressure-sensitive adhesive composition.

The present invention further relates to a photocurable pressure-sensitive adhesive sheet, comprising: a support; and the photocurable pressure-sensitive adhesive layer of the above formed on at least one side of the support.

The present invention further relates to a method for producing the photocurable pressure-sensitive adhesive composition, comprising the steps of: preparing a (meth)acryl-based polymer and then graft-polymerizing a cyclic ether group-containing monomer and optionally another monomer onto the (meth)acryl-based polymer to prepare a graft polymer; and mixing a cationic photopolymerization initiator with the graft polymer.

In the above-mentioned method, in the step of preparing a graft polymer, it is preferable that preparing the (meth)acryl-based polymer is followed by graft-polymerizing a cyclic ether group-containing monomer and another monomer onto the (meth)acryl-based polymer.

### EFFECTS OF THE INVENTION

The photocurable pressure-sensitive adhesive composition of the present invention can form a pressure-sensitive adhesive layer and sheet having high heat resistance, does not cause oozing or the like at room temperature and atmospheric pressure, has a sufficient initial adhesive power when dried and crosslinked, can be easily cured by light irradiation, and can form a pressure-sensitive adhesive layer having high peeling resistance. In the manufacturing process, the graft polymer to be present in the photocurable pressure-sensitive adhesive composition of the present invention maintains fluidity and therefore is easy to handle, so that the resulting composition can have good processability and good final tackiness.

### EMBODIMENTS FOR CARRYING OUT THE INVENTION

The photocurable pressure-sensitive adhesive composition of the present invention includes: a graft polymer including a (meth)acryl-based polymer containing 0.2 to 10% by weight of a hydroxyalkyl(meth)acrylamide monomer unit, and a chain that contains a cyclic ether group-containing monomer component and the chain is graft-polymerized onto the (meth)acryl-based polymer; and a cationic photopolymerization initiator.

Any (meth)acrylate may be used without restriction as a monomer unit to form the (meth)acryl-based polymer. For example, an alkyl (meth)acrylate having an alkyl group of 4 or more carbon atoms preferably makes up 50% by weight or more of the total monomer units of the (meth)acryl-based polymer.

As used herein, the simple term "alkyl (meth)acrylate" refers to a (meth)acrylate having a straight or branched chain alkyl group. The number of carbon atoms in the alkyl group should be 4 or more, preferably from 4 to 9. The term "(meth)acrylate" refers to acrylate and/or methacrylate, and "(meth)" is used in the same meaning in the description.

Examples of the alkyl (meth)acrylate include n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, and isostearyl (meth)acrylate. Particular examples include n-butyl (meth)acrylate and 2-ethylhexyl (meth)acrylate, and these may be used alone or in combination.

In an embodiment of the present invention, the amount of the alkyl (meth)acrylate is 50% by weight or more, preferably 80% by weight or more, more preferably 90% by weight or more, based on the total amount of all monomer components for the (meth)acrylic polymer. The amount of an alkyl (meth)acrylate is preferably 99.8% by weight or less and may be 98% by weight or less or 97% by weight or less.

In an embodiment of the present invention, the (meth)acryl-based polymer includes a hydroxyl group-containing monomer component having at least one hydroxyl group in an alkyl group. Specifically, this monomer is a hydroxyalkyl(meth)acrylic amide monomer containing a hydroxyalkyl group with one or more hydroxyl groups. In this monomer, the hydroxyl group is preferably present at the end of the alkyl group. The number of carbon atoms in the alkyl group is preferably from 2 to 8, more preferably from 2 to 6, even more preferably from 2 to 4. The addition of such a hydroxyl alkyl(meth)acrylamide monomer may have a good effect on the position where hydrogen is withdrawn during the graft polymerization or on the compatibility between the graft polymer and a homopolymer of the cyclic ether group-containing monomer, which is produced during the graft polymerization, and therefore, it is considered to be useful for the production of a graft polymer having good heat resistance.

Any monomer having a hydroxyl group and an unsaturated double bond-containing polymerizable functional group of a (meth)acryloyl group may be used as such a monomer. Examples of such a monomer include hydroxyalkyl (meth)acrylamide such as 2-hydroxyethyl (meth)acrylamide, 2-hydroxybutyl (meth)acrylamide, 3-hydroxypropyl (meth)acrylamide, 4-hydroxybutyl (meth)acrylamide, 6-hydroxyhexyl (meth)acrylamide, 8-hydroxyoctyl (meth)acrylamide, or 10-hydroxydecyl (meth)acrylamide.

The amount of the hydroxylalkyl(meth)acrylamide is 0.2% by weight or more, preferably 0.5% by weight or more, and more preferably 1% by weight or more, and 10% by weight or less based on the whole amount of monomer component. Preferably, 1% by weight or more and 10% by weight or less.

Besides the above monomers, other copolymerizable monomers may also be used alone or in combination as a monomer component(s) to form the (meth)acryl-based polymer, as long as the objectives of the present invention are not hindered.

For example, the unsaturated carboxylic acid-containing monomer other than the monomers above, can be used. Any monomer having a carboxyl group and an unsaturated double bond-containing polymerizable functional group such as a (meth)acryloyl group or a vinyl group may be used without restriction as the unsaturated carboxylic acid-containing monomer. Examples of the unsaturated carboxylic acid-containing monomer include (meth)acrylic acid, carboxyethyl (meth)acrylate, carboxypentyl (meth)acrylate, itaconic acid, maleic acid, fumaric acid, and crotonic acid. These may be used alone or in any combination. Among these, (meth)acrylic acid, particularly, acrylic acid is preferably used.

The unsaturated carboxylic acid-containing monomer is preferably used in an amount of 0.01 to 2% by weight, more preferably 0.05 to 2% by weight, even more preferably 0.05 to 1.5% by weight, in particular, preferably 0.1 to 1% by weight, based on the total amount of the monomer components used to form the (meth)acryl-based polymer.

Examples of other copolymerizable monomers include aromatic-ring containing monomers having an aromatic ring and an unsaturated double bond-containing polymerizable functional group such as a (meth)acryloyl group or a vinyl group. Examples of aromatic ring-containing monomers include phenoxyethyl (meth)acrylate, benzyl (meth)acrylate, phenol ethylene oxide-modified (meth)acrylate, 2-naphthoethyl (meth)acrylate, 2-(4-methoxy-1-naphthoxy)ethyl (meth)acrylate, phenoxypropyl (meth)acrylate, phenoxydiethylene glycol (meth)acrylate, and polystyryl (meth)acrylate.

Examples also include acid anhydride group-containing monomers such as maleic anhydride and itaconic anhydride; caprolactone adducts of acrylic acid; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; phosphate group-containing monomers such as 2-hydroxyethylacryloyl phosphate; and alkoxyalkyl (meth)acrylate monomers such as methoxyethyl (meth)acrylate and ethoxyethyl (meth)acrylate.

Examples that may also be used include vinyl monomers such as vinyl acetate, vinyl propionate, styrene, α-methylstyrene, and N-vinylcaprolactam; epoxy group-containing monomers such as glycidyl (meth)acrylate, methylglycidyl (meth)acrylate, and 3,4-epoxycyclohexylmethyl (meth)acrylate; glycol acrylate monomers such as polyethylene glycol (meth)acrylate, polypropylene glycol (meth)acrylate, methoxyethylene glycol (meth)acrylate, and methoxypolypropylene glycol (meth)acrylate; acrylate monomers such as tetrahydrofurfuryl (meth)acrylate, fluoro(meth)acrylate, silicone (meth)acrylate, and 2-methoxyethyl acrylate; and amide group-containing monomers, amino group-containing monomers, imide group-containing monomers, N-acryloylmorpholine, and vinyl ether monomers.

In an embodiment of the invention, the (meth)acryl-based polymer preferably has a weight average molecular weight of 600,000 or more, more preferably 700,000 to 3,000,000. The weight average molecular weight may refer to a polystyrene-equivalent weight average molecular weight as measured and calculated by gel permeation chromatography (GPC).

The method for producing such a (meth)acryl-based polymer may be appropriately selected from known production methods such as solution polymerization, bulk polymerization, emulsion polymerization, and various types of radical polymerization. The resulting (meth)acryl-based polymer may be any of a random copolymer and a block copolymer.

In solution polymerization, for example, ethyl acetate, toluene, or the like may be used as a polymerization solvent. An example of solution polymerization includes performing the reaction under a stream of inert gas such as nitrogen in the presence of a polymerization initiator typically under the reaction conditions of a temperature of about 50 to about 70°C and a time period of about 5 to about 30 hours.

Any appropriately selected polymerization initiator, chain transfer agent, emulsifying agent, or the like may be used for radical polymerization. The weight average molecular weight of the (meth)acryl-based polymer can be controlled by the amount of the addition of the polymerization initiator or the chain transfer agent or by the reaction conditions. The amount of the addition may be controlled as appropriate depending on the type of these materials.

Examples of the polymerization initiator include, but are not limited to, azo initiators such as 2,2'-azobisisobutylonitrile, 2,2'-azobis(2-amidinopropane)dihydrochloride, 2,2'-azobis[2-(5-methyl-2-imidazoline-2-yl)propane]dihydrochloride, 2,2'-azobis(2-methylpropionamidine)disulfate, 2,2'-azobis(N,N'-dimethyleneisobutylamidine), and 2,2'-azobis[N-(2-carboxyethyl)-2-methylpropionamidine]hydrate (VA-057, manufactured by Wako Pure Chemical Industries, Ltd.); persulfates such as potassium persulfate and ammonium persulfate; peroxide initiators such as di(2-ethylhexyl)peroxydicarbonate, di(4-tert-butylcyclohexyl)peroxydicarbonate, di-sec-butylperoxydicarbonate, tert-butylperoxyneodecanoate, tert-hexylperoxypivalate, tert-butylperoxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, tert-butylperoxyisobutylate, 1,1-di(tert-hexylperoxy)cyclohexane, tert-butylhydroperoxide, and hydrogen peroxide; and redox system initiators of a combination of a peroxide and a reducing agent, such as a combination of a persulfate and sodium hydrogen sulfite and a combination of a peroxide and sodium ascorbate.

These polymerization initiators may be used alone or in combination of two or more. The total content of the polymerization initiator(s) is preferably from 0.005 to 1 part by weight, more preferably from 0.02 to 0.5 parts by weight, based on 100 parts by weight of the monomers.

For example, when the (meth)acryl-based polymer with the above weight average molecular weight is produced using 2,2'-azobisisobutylonitrile as the polymerization initiator, the polymerization initiator is preferably used in an amount of about 0.06 to about 0.2 parts by weight, more preferably about 0.08 to about 0.175 parts by weight, based on 100 parts by weight of the total amount of the monomer components.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. The chain transfer agents may be used alone or in combination of two or more. The total content of the chain transfer agent(s) may be about 0.1 parts by weight or less, based on 100 parts by weight of the total amount of the monomer components.

Emulsion polymerization may also be performed using an emulsifying agent, examples of which include an anionic emulsifying agent such as sodium lauryl sulfate, ammonium lauryl sulfate, sodium dodecylbenzenesulfonate, ammonium polyoxyethylene alkyl ether sulfate, or sodium polyoxyethylene alkyl phenyl ether sulfate; and a nonionic emulsifying agent such as polyoxyethylene alkyl ether, polyoxyethylene alkyl phenyl ether, polyoxyethylene fatty acid ester, or a polyoxyethylene-polyoxypropylene block polymer. These emulsifying agents may be used alone or in combination of two or more.

The emulsifying agent may be a reactive emulsifier such as an emulsifier having an introduced radically polymerizable functional group such as a propenyl group or an allyl ether group, examples of which include AQUALON HS-10, HS-20, KH-10, BC-05, BC-10, and BC-20 (all manufactured by DAI-ICHI KOGYO SEIYAKU CO., LTD.), and ADEKA REASOAP SE-10N (manufactured by ADEKA CORPORATION), and others. The reactive emulsifier is preferred, because after polymerization, it can be incorporated into a polymer chain to improve water resistance. Based on 100 parts by weight of the total amount of the monomer components, the emulsifier is preferably used in an amount of 0.3 to 5 parts by weight, more preferably 0.5 to 1 part by weight, in view of polymerization stability or mechanical stability.

The (meth)acryl-based polymer preferably may have a glass transition temperature (Tg) of 250 K or less, preferably 240 K or less. The glass transition temperature is preferably 200 K or more. When the glass transition temperature is 250 K or less, the resulting pressure-sensitive adhesive composition has good heat resistance and high internal cohesive strength. Such a (meth)acryl-based polymer can be prepared using appropriately selected monomer components and composition ratio. For example, the polymer with such a glass transition temperature can be obtained by solution polymerization using 0.06 to 0.2 parts by weight of a polymerization initiator such as azobisisobutylonitrile or benzoyl peroxide and a polymerization solvent such as ethyl acetate, in which the reaction is performed under a nitrogen stream at 50°C to 70°C for 8 to 30 hours. The glass transition temperature (Tg) may be calculated from the following Fox formula: 1/Tg=W1/Tg1+W2/Tg2+W3/Tg3+..., wherein Tg1, Tg2, Tg3, and so on each represent the glass transition temperature (expressed by absolute temperature) of each of homopolymers 1, 2, 3, and so on of the copolymerized components, and W1, W2, W3, and so on each represent the weight fraction of each copolymerized component. The glass transition temperature (Tg) of each homopolymer was obtained from Polymer Handbook, 4th edition, John Wiley & Sons. Inc.

Subsequently, the resulting (meth)acryl-based polymer is directly subjected to graft polymerization, or the resulting (meth)acryl-based polymer is diluted with a diluent, and the diluted solution is subjected to graft polymerization.

Examples of the diluent include, but are not limited to, ethyl acetate and toluene.

The graft polymerization is performed by allowing the cyclic ether group-containing monomer and optionally any other monomer(s) to react with the (meth)acryl-based polymer.

In this process, the cyclic ether group-containing monomer is preferably, but not limited to, an epoxy group-containing monomer, an oxetane group-containing monomer, or a combination of both monomers.

For example, the epoxy group-containing monomer may be 4-hydroxybutylglycidyl acrylate, glycidyl acrylate, glycidyl methacrylate, 3,4-epoxycyclohexylmethyl acrylate, 3,4-epoxycyclohexylmethyl methacrylate, or 4-hydroxybutyl acrylate glycidyl ether, and these may be used alone or in any combination.

For example, the oxetane group-containing monomer may be 3-oxetanylmethyl (meth)acrylate, 3-methyl-3-oxetanylmethyl (meth)acrylate, 3-ethyl-3-oxetanylmethyl (meth)acrylate, 3-butyl-3-oxetanylmethyl (meth)acrylate, or 3-hexyl-3-oxetanylmethyl (meth)acrylate, and these may be used alone or in any combination.

The amount of the cyclic ether group-containing monomer is preferably 2 parts by weight or more, more preferably 3 parts by weight or more, based on 100 parts by weight of the (meth)acryl-based polymer. The upper limit of the amount is preferably, but not limited to, 50 parts by weight or less, more preferably 30 parts by weight or less. If the amount of the cyclic ether group-containing monomer is 2 parts by weight or more, the function of the composition as a pressure-sensitive adhesive can be sufficiently produced, but if it is 50 parts by weight or more, the composition may have reduced tackiness so that it may be less tacky at the initial stage.

In the graft polymerization, any other monomer capable of undergoing co-grafting may also be used together with the cyclic ether group-containing monomer. Such a monomer may be any monomer containing no cyclic ether group, for example, which may be alkyl (meth)acrylate of 1 to 9 carbon atoms. Examples of alkyl (meth)acrylate include methyl (meth)acrylate, ethyl (meth)acrylate, n-butyl (meth)acrylate, and 2-ethylhexyl acrylate. Alicyclic (meth)acrylates such as cyclohexyl (meth)acrylate and isobornyl (meth)acrylate may also be used. These may be used alone or in any combination.

When such an additional monomer capable of undergoing co-grafting is used, the light irradiation dose for curing the pressure-sensitive adhesive can be reduced. This is considered to be because of an increase in the mobility of the grafted chain or an increase in the compatibility between the backbone polymer and the grafted chain or the ungrafted chain as a by-product.

It is also preferred that such an additional monomer should be selected from the same monomers as those used to form the main chain (backbone), namely, the (meth)acryl-based polymer.

The amount of the other monomer(s) than the cyclic ether group-containing monomer is preferably from 5 to 50 parts by weight based on 100 parts by weight of the (meth)acryl-based polymer. If the content of the other monomer(s) is low, the effect of reducing the light irradiation dose for curing may be insufficient, and if it is high, peeling resistance after the light irradiation may be high.

The graft polymerization conditions are not restricted, and the graft polymerization may be performed by methods known to those skilled in the art. In the polymerization, a peroxide is preferably used as a polymerization initiator.

The amount of such a polymerization initiator may be from 0.02 to 5 parts by weight, based on 100 parts by weight of the (meth)acryl-based polymer. If the amount of the polymerization initiator is small, it may take too long to complete the graft polymerization reaction, and if the amount of the polymerization initiator is large, a large amount of a homopolymer of the cyclic ether group-containing monomer may be produced, which is not preferred.

In the case of solution polymerization, for example, the graft polymerization may be performed by a non-limiting process including adding the cyclic ether group-containing monomer and a solvent capable of controlling viscosity to a solution of the acryl-based copolymer, replacing the air with nitrogen, then adding 0.02 to 5 parts by weight of a peroxide polymerization initiator such as dibenzoyl peroxide to the mixture, and heating the mixture at 50°C to 80°C for 4 to 15 hours.

The properties (such as the molecular weight of the graft polymer and the size of the branched part of the graft polymer) of the graft polymer to be obtained can be selected as appropriate using the reaction conditions.

The pressure-sensitive adhesive composition of the present invention contains the graft polymer obtained as described above and a cationic photopolymerization initiator.

The cationic photopolymerization initiator to be used is preferably any of cationic photopolymerization initiators known to those skilled in the art. More specifically, at least one selected from the group consisting of an allylsulfonium hexafluorophosphate salt, a sulfonium hexafluorophosphate salt, and bis(alkylphenyl)iodonium hexafluorophosphate may be used.

Such cationic photopolymerization initiators may be used alone or in combination of two or more, and the total content of the cationic photopolymerization initiator(s) may be from 0.1 to 5 parts by weight, preferably from 0.3 to 3 parts by weight, based on 100 parts by weight of the (meth)acryl-based polymer.

If necessary, a crosslinking agent may be added to the photocurable pressure-sensitive adhesive composition of the invention. The crosslinking agent is typically, but not limited to, an isocyanate crosslinking agent which is a compound having two or more isocyanate groups (which may include functional groups that are temporarily protected with an isocyanate blocking agent or by oligomerization and are convertible to isocyanate groups) per molecule.

Examples of the isocyanate crosslinking agent include aromatic isocyanates such as tolylene diisocyanate and xylene diisocyanate, alicyclic isocyanates such as isophorone diisocyanate, and aliphatic isocyanates such as hexamethylene diisocyanate.

More specifically, examples of the isocyanate crosslinking agent include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as a trimethylolpropane-tolylene diisocyanate trimer adduct (CORONATE L (trade name) manufactured by NIPPON POLYURETHANE INDUSTRY CO., LTD.), a trimethylolpropane-hexamethylene diisocyanate trimer adduct (CORONATE HL (trade name) manufactured by NIPPON POLYURETHANE INDUSTRY CO., LTD.), and an isocyanurate of hexamethylene diisocyanate (CORONATE HX (trade name) manufactured by NIPPON POLYURETHANE INDUSTRY CO., LTD.); polyether polyisocyanates and polyester polyisocyanates; adducts thereof with various polyols; and polyisocyanates polyfunctionalized with an isocyanurate bond, a biuret bond, an allophanate bond, or the like. In particular, aliphatic isocyanates are preferably used, because of their high reaction speed.

These isocyanate crosslinking agents may be used alone or in combination of two or more. The total content of the isocyanate crosslinking agent(s) is preferably from 0.01 to 2 parts by weight, more preferably from 0.02 to 2 parts by weight, even more preferably from 0.05 to 1.5 parts by weight, based on 100 parts by weight of the (meth)acryl-based polymer. The content may be appropriately determined taking into account cohesive strength, prevention of delamination in a durability test, or the like.

An organic crosslinking agent or a polyfunctional metal chelate may also be used together as the crosslinking agent. The organic crosslinking agent may be an epoxy crosslinking agent (which includes a compound having two or more epoxy groups per molecule). Examples of such an epoxy crosslinking agent include ethylene glycol diglycidyl ether, propylene glycol diglycidyl ether, terephthalic acid diglycidyl ester acrylate, and spiroglycol diglycidyl ether. These may be used alone or in combination of two or more.

The polyfunctional metal chelate is composed of an organic compound and a polyvalent metal that is covalently or coordinately bonded to the organic compound. Examples of the polyvalent metal atom include Al, Cr, Zr, Co, Cu, Fe, Ni, V, Zn, In, Ca, Mg, Mn, Y, Ce, Sr, Ba, Mo, La, Sn, and Ti. The organic compound has a covalent or coordinate bond-forming atom such as an oxygen atom. Examples of the organic compound include alkyl esters, alcohol compounds, carboxylic acid compounds, ether compounds, and ketone compounds.

In an embodiment of the invention, an oxazoline crosslinking agent or a peroxide may be further added as the crosslinking agent.

Any oxazoline crosslinking agent having an oxazoline group in the molecule may be used without restriction. The oxazoline group may be any of a 2-oxazoline group, a 3-oxazoline group, or a 4-oxazoline group. The oxazoline crosslinking agent is preferably a copolymer of an addition-polymerizable oxazoline and an unsaturated monomer, in particular, which is preferably produced using 2-isopropenyl-2-oxazoline as the addition-polymerizable oxazoline. Examples include EPOCROS WS-500 (trade name) manufactured by NIPPON SHOKUBAI CO., LTD., etc.

Any peroxide capable of producing active radical species upon heating and promoting the crosslinking of the base polymer in the pressure-sensitive adhesive composition may be appropriately used. In view of workability or stability, a peroxide with a one-minute half-life temperature of 80°C to 160°C is preferably used, and a peroxide with a one-minute half-life temperature of 90°C to 140°C is more preferably used.

Examples of peroxides that may be used include di(2-ethylhexyl) peroxydicarbonate (one-minute half-life temperature: 90.6°C), di(4-tert-butylcyclohexyl) peroxydicarbonate (one-minute half-life temperature: 92.1°C), di-sec-butyl peroxydicarbonate (one-minute half-life temperature: 92.4°C), tert-butyl peroxyneodecanoate (one-minute half-life temperature: 103.5°C), tert-hexyl peroxypivalate (one-minute half-life temperature: 109.1°C), tert-butyl peroxypivalate (one-minute half-life temperature: 110.3°C), dilauroyl peroxide (one-minute half-life temperature: 116.4°C), di-n-octanoylperoxide (one-minute half-life temperature: 117.4°C), 1,1,3,3-tetramethylbutylperoxy-2-ethyl hexanoate (one-minute half-life temperature: 124.3°C), di(4-methylbenzoyl) peroxide (one-minute half-life temperature: 128.2°C), dibenzoyl peroxide (one-minute half-life temperature: 130.0°C), tert-butyl peroxyisobutylate (one-minute half-life temperature: 136.1°C), and 1,1-di(tert-hexylperoxy)cyclohexane (one-minute half-life temperature: 149.2°C). In particular, di(4-tert-butylcyclohexyl) peroxydicarbonate (one-minute half-life temperature: 92.1°C), dilauroyl peroxide (one-minute half-life temperature: 116.4°C), dibenzoyl peroxide (one-minute half-life temperature: 130.0°C), or the like is preferably used, because they can provide high crosslinking reaction efficiency.

The half life of the peroxide is an indicator of how fast the peroxide can be decomposed and refers to the time required for the remaining amount of the peroxide to reach one half of the original amount. The decomposition temperature required for a certain half life time and the half life time obtained at a certain temperature are shown in catalogs furnished by manufacturers, such as "Organic Peroxide Catalog, 9th Edition, May, 2003" furnished by NOF CORPORATION.

These peroxides may be used alone or in combination of two or more. The total content of the peroxide(s) may be from 0.01 to 2 parts by weight, preferably from 0.04 to 1.5 parts by weight, more preferably from 0.05 to 1 part by weight, based on 100 parts by weight of the (meth)acryl-based polymer. The content may be appropriately selected within this range so that workability, re-workability, crosslink stability, peelability, or the like can be controlled.

The amount of decomposition of the peroxide may be determined by a method of measuring the peroxide residue after the reaction process by high performance liquid chromatography (HPLC).

More specifically, for example, after the reaction process, about 0.2 g of each pressure-sensitive adhesive composition is taken out and immersed in 10 ml of ethyl acetate and subjected to shaking extraction at 25°C and 120 rpm for 3 hours in a shaker, and then allowed to stand at room temperature for 3 days. Subsequently, 10 ml of acetonitrile is added, and the mixture is shaken at 25°C and 120 rpm for 30 minutes. About 10 µl of the liquid extract obtained by filtration through a membrane filter (0.45 µm) is subjected to HPLC by injection and analyzed so that the amount of the peroxide after the reaction process is determined.

When a pressure-sensitive adhesive layer is formed using the crosslinking agent(s), the total content of the crosslinking agent(s) should be controlled, and the effect of the crosslinking temperature or the crosslinking time should be fully taken into account.

The photocurable pressure-sensitive adhesive composition of the invention may further contain an epoxy resin or an oxetane resin for further increasing adhesive strength or heat resistance.

Examples of the epoxy resin include bifunctional or polyfunctional epoxy resins such as a bisphenol A type, a bisphenol F type, a bisphenol S type, a brominated bisphenol A type, a hydrogenated bisphenol A type, a bisphenol AF type, a biphenyl type, a naphthalene type, a fluorene type, a phenol novolac type, a cresol novolac type, a trishydroxyphenylmethane type, and a tetraphenylolethane type, a hydantoin type, and a glycidyl amine type such as a trisglycidyl isocyanurate type. These epoxy resins may be used alone or in combination of two or more.

These epoxy resins may be, but not limited to, commercially available epoxy resins. Examples of such commercially available epoxy resins include, but are not limited to, jER 828 and jER 806 manufactured by JAPAN EPOXY RESIN CO., LTD., known as bisphenol type epoxy resins; YX8000 and YX8034 manufactured by JAPAN EPOXY RESIN CO., LTD., known as alicyclic epoxy resins; EP4000 and EP4005 manufactured by ADEKA CORPORATION; and Denacol EX-313, EX-512, EX-614B, and EX-810 manufactured by NAGASE CHEMTEX CORPORATION, known as polyglycidyl ethers of polyalcohol.

Known oxetane resins may be used, such as xylylene dioxetane such as 1,4-bis{[(3-ethyl-3-oxetanyl)methoxy]methyl}benzene, 3-ethyl-3-{[3-ethyloxetane-3-yl]methoxy}methyl}oxetane, 3-ethylhexyloxetane, 3-ethyl-3-hydroxyoxetane, and 3-ethyl-3-hydroxymethyloxetane. These oxetane resins may be used alone or in combination of two or more.

The oxetane resins may be, but not limited to, commercially available oxetane resins. Examples of such commercially available oxetane resins include, but are not limited to, ARON OXETANE OXT-121, OXT-221, OXT-101, and OXT-212 manufactured by TOAGOSEI CO., LTD.

One or both of such epoxy and oxetane resins may be used alone or in combination to form the photocurable pressure-sensitive adhesive composition of the invention.

In an embodiment of the invention, if added, the total amount of the epoxy resin and/or the oxetane resin and the like is preferably 10 parts by weight or more, more preferably 20 parts by weight or more, and preferably 100 parts by weight or less, more preferably 80 parts by weight or less, based on 100 parts by weight of the graft polymer.

In an embodiment of the invention, the epoxy resin may be added to the graft polymer in which the cyclic ether group-containing monomer is grafted onto an acrylic polymer, so that a composition that does not cause oozing or the like before curing and is capable of forming a good photocurable pressure-sensitive adhesive layer can be prepared. This is considered to be because the grafted cyclic ether group can be compatibilized with a low molecular weight epoxy resin to form a strong pressure-sensitive adhesive layer structure.

The photocurable pressure-sensitive adhesive composition of the invention may also contain any known additive such as a powder of a colorant, a pigment or the like, a dye, a surfactant, a plasticizer, a tackifier, a surface lubricant, a leveling agent, a softening agent, an antioxidant, an age resistor, a light stabilizer, an ultraviolet absorbing agent, a polymerization inhibitor, an inorganic or organic filler, a metal powder, or a particulate or foil material, which may be added as appropriate depending on the intended use. Within the controllable range, a reducing agent may also be added for use of a redox system.

The photocurable pressure-sensitive adhesive layer of the invention is preferably formed on at least one side of a support.

The photocurable pressure-sensitive adhesive layer may be formed by a non-limiting process including applying the pressure-sensitive adhesive composition to one or both sides of a support material and drying the composition. Alternatively, the photocurable pressure-sensitive adhesive layer or the photocurable pressure-sensitive adhesive sheet may be formed by a method including forming a photocurable pressure-sensitive adhesive layer or layers on a separator (release film) and transferring the photocurable pressure-sensitive adhesive layer or layers onto one or both sides of a support material. Alternatively, a separator may also be used as the support material, and a backing-less double-coated pressure-sensitive adhesive sheet may also be subjected to practical use. Photocurable pressure-sensitive adhesive sheets may be used in the form of sheets, tapes or the like.

For example, the support material for the pressure-sensitive adhesive sheet may be any appropriate thin material such as a porous backing of paper, a cloth, a nonwoven fabric, or the like, a film or sheet of a plastic such as polyethylene, polypropylene, polyethylene terephthalate, or polyester, a net, a foam, a metal foil, or a laminate thereof. These support materials may be appropriately selected depending on the intended use of the pressure-sensitive adhesive sheet. The thickness of the support material is not restricted and may be determined as appropriate depending on the intended use.

More specifically, the photocurable pressure-sensitive adhesive layer is typically formed by a method including applying the pressure-sensitive adhesive composition to a release-treated separator or the like, removing the polymerization solvent and so on by drying, crosslinking the composition to form a pressure-sensitive adhesive layer, and then transferring the pressure-sensitive adhesive layer onto a support such as an optical member, or by a method including applying the pressure-sensitive adhesive composition to an optical member, removing the polymerization solvent and so on by drying, and photo-crosslinking the composition to form a pressure-sensitive adhesive layer on the optical member. When the pressure-sensitive adhesive is applied, one or more solvents other than the polymerization solvent may be newly added as needed.

A silicone release liner is preferably used as the release-treated separator. The adhesive composition of the invention may be applied to such a liner and dried to form a pressure-sensitive adhesive layer. In this process, any appropriate method may be used for drying the pressure-sensitive adhesive, depending on the purpose. Preferably, a method of heating and drying the coating film is used. The heating and drying temperature is preferably from 40°C to 200°C, more preferably from 50°C to 180°C, in particular, preferably from 70°C to 170°C. When the heating temperature is set within the range, a pressure-sensitive adhesive with a high level of adhesive properties can be obtained.

Any appropriate drying time may be used as needed. The drying time is preferably from 5 seconds to 20 minutes, more preferably from 5 seconds to 10 minutes, in particular, preferably from 10 seconds to 5 minutes.

The surface of the support may also be coated with an anchor layer or subjected to any of various adhesion-facilitating treatments such as a corona treatment and a plasma treatment, before the pressure-sensitive adhesive layer is formed. The surface of the pressure-sensitive adhesive layer may also be subjected to an adhesion-facilitating treatment.

Various methods may be used to form the pressure-sensitive adhesive layer. Examples of such methods include roll coating, kiss roll coating, gravure coating, reverse coating, roll brush coating, spray coating, dip roll coating, bar coating, knife coating, air knife coating, curtain coating, lip coating, and extrusion coating with a die coater or the like.

The thickness of the pressure-sensitive adhesive layer is typically, but not limited to, from about 1 to about 100 µm, preferably from 2 to 50 µm, more preferably from 2 to 40 µm, even more preferably from 5 to 35 µm.

The pressure-sensitive adhesive layer may be exposed. In such a case, the pressure-sensitive adhesive layer may be protected by a release-treated sheet (separator) until it is actually used.

Examples of the material used to form such a protective separator include a plastic film such as a polyethylene, polypropylene, polyethylene terephthalate, or polyester film, a porous material such as paper, fabric, or nonwoven fabric, and appropriate thin materials such as a net, a foamed sheet, a metal foil, and a laminate thereof. A plastic film is advantageously used, because of its good surface smoothness.

Any plastic film capable of protecting the pressure-sensitive adhesive layer may be used, examples of which include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylenevinyl acetate copolymer film.

The thickness of the separator is generally from about 5 to about 200 µm, preferably from about 5 to about 100 µm. If necessary, the separator may be subjected to a release treatment and an antifouling treatment with a silicone, fluoride, long-chain alkyl, or fatty acid amide release agent, release treatment and an antifouling treatment with silica powder or the like, or subjected to an antistatic treatment of coating type, kneading and mixing type, vapor-deposition type, or the like. In particular, when the surface of the separator is appropriately subjected to a release treatment such as a silicone treatment, a long-chain alkyl treatment, or a fluorine treatment, the releasability from the pressure-sensitive adhesive layer can be further increased.

The release-treated sheet may be used directly as a separator for the photocurable pressure-sensitive adhesive sheet, so that the process can be simplified.

The photocurable pressure-sensitive adhesive composition, the photocurable pressure-sensitive adhesive layer, and the photocurable pressure-sensitive adhesive sheet according to the invention are cured when irradiated with a specific light beam. Therefore, the photocurable pressure-sensitive adhesive sheet of the invention can be easily cured by light irradiation immediately before or after bonded to the adherend. For example, the photocurable pressure-sensitive adhesive sheet to be interposed between the adherend and another member is preferably used in the form of a double-coated pressure-sensitive adhesive tape or the like and can be cured by light irradiation at any time after the bonding. Such a curing reaction provides reliable adhesion to the adherend or reliable adhesion between the adherend and the member.

The light to be applied is preferably, but not limited to an active energy ray such as ultraviolet light, visible light, or an electron beam. A crosslinking process by ultraviolet irradiation may be performed using an appropriate ultraviolet light source such as a highpressure mercury lamp, a low-pressure mercury lamp, an excimer laser, or a metal halide lamp. The ultraviolet irradiation dose in such a process may be selected as appropriate depending on the required degree of crosslinking. In general, the ultraviolet irradiation dose is preferably selected in the range of 0.2 to 10 J/cm². The temperature during the irradiation is preferably, but not limited to, about 140°C or less, taking into account the heat resistance of the support.

The photocurable pressure-sensitive adhesive composition, the photocurable pressure-sensitive adhesive layer, and the photocurable pressure-sensitive adhesive sheet according to the invention can be used in any application. For example, they can be used in a wide variety of applications including pressure-sensitive adhesive applications for optical members, applications for bonding semiconductor devices to organic boards or lead frames, applications for bonding automotive parts, and building applications.

### EXAMPLES

Hereinafter, the invention is more specifically described with reference to the Examples, which however are not intended to limit the invention. In each example, "parts" and "%" are all by weight. Unless otherwise specified below, the conditions for allowing to stand at room temperature are 23°C and 65%RH (for one hour or one week) in all cases.

### <Measurement of Weight Average Molecular Weight>

The weight average molecular weight of the resulting (meth)acryl-based polymer was measured by gel permeation chromatography (GPC). The sample was dissolved in dimethylformamide to form a 0.1% by weight solution. The solution was allowed to stand overnight and then filtered through a 0.45 µm membrane filter. The resulting filtrate was used in the measurement.
Analyzer: HLC-8120GPC manufactured by TOSOH CORPORATION
Columns: G7000H_{XL}+GMH_{XL}+GMH_{XZ} manufactured by TOSOH
CORPORATION
Column size: each 7.8 mmϕ x 30 cm, 90 cm in total
Eluent: tetrahydrofuran (a concentration of 0.1% by weight)
Flow rate: 0.8 ml/minute
Detector: differential refractometer (RI)
Column temperature: 40°C
Injection volume: 100 µl
Standard sample: polystyrene

### <Measurement of Gel Fraction>

The dried and crosslinked pressure-sensitive adhesive (with an initial weight W1) was immersed and stored in an ethyl acetate solution at room temperature for 1 week. The insoluble matter was then taken out and measured for dry weight (W2). The gel fraction was determined according to the following formula: Gel fraction=(W2/W1) x 100.

### <Method of measuring heat resistance>

A TMA (thermomechanical analysis) measurement was carried out under the following condition on the photocured pressure-sensitive adhesive film, so as to measure the level of heat resistance. The thermal properties were measured by TMA/SS6100 manufactured by SII Nanotechnology Inc. with a cross-sectional area of 0.6 mm², a sample length of 10 mm, a load of 19.6 mN, and a temperature rise rate of 10°C/min and at 20°C to 300°C. As the heat resistance temperature, the bending point temperature was adopted.

### Example 1

### (Preparation of acryl-based polymer)

A four-neck flask equipped with a stirring blade, a thermometer, a nitrogen gas introduction tube, and a condenser was loaded with 97 parts by weight of n-butyl acrylate, 3 parts by weight of hydroxyethylacrylamide (Kohjin Co., Ltd HEAA), and 0.1 parts by weight of 2,2'-azobisisobutyronitrile as a polymerization initiator together with 140 parts by weight of ethyl acetate and 60 parts by weight of toluene. While the mixture was being moderately stirred, nitrogen gas was introduced to perform nitrogen substitution for 1 hour. Thereafter, polymerization reaction was carried out for 10 hours while keeping the liquid temperature within the flask around 55°C, so as to prepare an acryl-based polymer solution having a weight-average molecular weight of 900,000. The obtained acryl-based polymer had a glass transition temperature of 225 K.

### (Preparation of graft polymer)

The obtained acryl-based polymer solution was diluted with ethyl acetate so that the solid component would occupy 25%, so as to prepare a diluted solution (I). A four-neck flask equipped with a stirring blade, a thermometer, a nitrogen gas introduction tube, and a condenser was loaded with 10 parts of 4-hydroxybutyl acrylate glycidyl ether, 10 parts of 2-ethylhexyl acrylate, and 0.1 parts of benzoyl peroxide relative to 400 parts by weight of the diluted solution (I). While the mixture was being moderately stirred, nitrogen gas was introduced to perform nitrogen substitution for 1 hour. Thereafter, polymerization reaction was carried out for 4 hours while keeping the liquid temperature within the flask around 60°C and subsequently at 70°C for 4 hours, so as to obtain a graft polymer solution.

### (Formation of pressure-sensitive adhesive layer)

### Sample for adhering strength measurement: 1A

Subsequently, 0.3 parts by weight of trimethylolpropane adduct of hexamethylene diisocyanate (Coronate HL manufactured by Nippon Polyurethane Industry Co., Ltd.) and 1 part by weight of allylsulfonium hexafluorophosphate (ESACURE 1064 manufactured by LAMBERTI Co., Ltd.) were blended relative to 100 parts by weight of the solid component of the graft polymer solution obtained in this manner, so as to prepare a pressure-sensitive adhesive solution.

The pressure-sensitive adhesive solution was applied onto one surface of a polyethylene terephthalate (PET) film ("S-10" manufactured by Toray Industries, Inc.) having a thickness of 25 µm so that the thickness of the pressure-sensitive adhesive layer after drying would be 20 µm. The resultant was dried at 120°C for 3 minutes to prepare a test sample, which was bonded to a PET separator (MRF-38 manufactured by Mitsubishi Resin Co., Ltd.) having been subjected to a silicone treatment and having a thickness of 38 µm.

### (Formation of pressure-sensitive adhesive layer)

### Sample for gel fraction measurement: 1A

Also, measurement of gel fraction was carried out without radiating light on the test sample 1A obtained in this manner, as a gel fraction without radiation of light.

### (Light radiation) 1B

Subsequently, a sample piece of 20 mm x 100 mm was cut out from the test sample and was bonded onto an acrylic plate having a thickness of 2 mm ("Acrylite" manufactured by Mitsubishi Rayon Co., Ltd.) and a BA plate having a thickness of 0.4 mm (SUS430 steel plate surface-finished BA steel plate) by reciprocating with a roll of 2 kg once. The 180° peel adhering strength (peeling speed of 300 mm/min) of the bond was measured as an adhering strength without radiation of light. After light radiation was carried out at 1 J/cm² with a metal halide UV lamp on this, a dark reaction treatment (50°C, 48 hours) was carried out. The 180° peel adhering strength of this sample was measured as an adhering strength at the time of radiation with light.

### (Light radiation) 1C

After light radiation was carried out at 1 J/cm² with a metal halide UV lamp on the test sample 2A, a dark reaction treatment (50°C, 48 hours) was carried out. With this sample, the gel fraction was measured as a gel fraction at the time of radiation with light.

### Example 2

### (Preparation of acryl-based polymer)

An acryl-based polymer solution was prepared in the same manner as in Example 1.

### (Preparation of graft polymer)

The obtained acryl-based polymer solution was diluted with ethyl acetate so that the solid component would occupy 25%, so as to prepare a diluted solution (I). A four-neck flask equipped with a stirring blade, a thermometer, a nitrogen gas introduction tube, and a condenser was loaded with 10 parts of 4-hydroxybutyl acrylate glycidyl ether, 10 parts of isobornyl acrylate, and 0.1 parts of benzoyl peroxide relative to 400 parts by weight of the diluted solution (I). While the mixture was being moderately stirred, nitrogen gas was introduced to perform nitrogen substitution for 1 hour. Thereafter, polymerization reaction was carried out for 4 hours while keeping the liquid temperature within the flask around 60°C and subsequently at 70°C for 4 hours, so as to obtain a graft polymer solution.

### (Formation of pressure-sensitive adhesive layer)

### Sample for adhering strength measurement: 2A

Subsequently, 0.3 parts by weight of trimethylolpropane adduct of hexamethylene diisocyanate (Coronate HL manufactured by Nippon Polyurethane Industry Co., Ltd.) and 1 part by weight of allylsulfonium hexafluorophosphate (ESACURE 1064 manufactured by LAMBERTI Co., Ltd.) were blended relative to 100 parts by weight of the solid component of the graft polymer solution obtained in this manner, so as to prepare a pressure-sensitive adhesive solution.

The pressure-sensitive adhesive solution was applied onto one surface of a polyethylene terephthalate (PET) film ("S-10" manufactured by Toray Industries, Inc.) having a thickness of 25 µm so that the thickness of the pressure-sensitive adhesive layer after drying would be 20 µm. The resultant was dried at 120°C for 3 minutes to prepare a test sample, which was bonded to a PET separator (MRF-38 manufactured by Mitsubishi Resin Co., Ltd.) having been subjected to a silicone treatment and having a thickness of 38 µm.

### (Formation of pressure-sensitive adhesive layer)

### Sample for gel fraction measurement: 2A

Also, measurement of gel fraction was carried out without radiating light on the test sample 2A obtained in this manner, as a gel fraction without radiation of light.

### (Light radiation) 2B

Subsequently, a sample piece of 20 mm x 100 mm was cut out from the test sample 2A and was bonded onto an acrylic plate having a thickness of 2 mm ("Acrylite" manufactured by Mitsubishi Rayon Co., Ltd.) and a BA plate having a thickness of 0.4 mm (SUS430 steel plate surface-finished BA steel plate) by reciprocating with a roll of 2 kg once. The 180° peel adhering strength (peeling speed of 300 mm/min) of the bond was measured as an adhering strength without radiation of light. After light radiation was carried out at 1 J/cm² with a metal halide UV lamp on this, a dark reaction treatment (50°C, 48 hours) was carried out. The 180° peel adhering strength of this sample was measured as an adhering strength at the time of radiation with light.

### (Light radiation) 2C

After light radiation was carried out at 1 J/cm² with a metal halide UV lamp on the test sample 2A, a dark reaction treatment (50°C, 48 hours) was carried out. With this sample, the gel fraction was measured as a gel fraction at the time of radiation with light.

### Comparative Example 1

### (Preparation of acryl-based polymer)

A four-neck flask equipped with a stirring blade, a thermometer, a nitrogen gas introduction tube, and a condenser was loaded with 97 parts by weight of n-butyl acrylate, 3 parts by weight of 4-hydroxybutyl acrylate, and 0.1 parts by weight of 2,2'-azobisisobutyronitrile as a polymerization initiator together with 140 parts by weight of ethyl acetate and 60 parts by weight of toluene. While the mixture was being moderately stirred, nitrogen gas was introduced to perform nitrogen substitution for 1 hour. Thereafter, polymerization reaction was carried out for 10 hours while keeping the liquid temperature within the flask around 55°C, so as to prepare an acryl-based polymer solution having a weight-average molecular weight of 880,000. The obtained polymer had a glass transition temperature of 223 K.

### (Preparation of graft polymer)

The obtained acryl-based polymer solution was diluted with ethyl acetate so that the solid component would occupy 25%, so as to prepare a diluted solution (I). A four-neck flask equipped with a stirring blade, a thermometer, a nitrogen gas introduction tube, and a condenser was loaded with 10 parts of 4-hydroxybutyl acrylate glycidyl ether, 10 parts of 2-ethylhexyl acrylate, and 0.1 parts of benzoyl peroxide relative to 400 parts by weight of the diluted solution (I). While the mixture was being moderately stirred, nitrogen gas was introduced to perform nitrogen substitution for 1 hour. Thereafter, polymerization reaction was carried out for 4 hours while keeping the liquid temperature within the flask around 60°C and subsequently at 70°C for 4 hours, so as to obtain a graft polymer solution.

### (Formation of pressure-sensitive adhesive layer)

### Sample for adhering strength measurement: 3A

Subsequently, 0.3 parts by weight of trimethylolpropane adduct of hexamethylene diisocyanate (Coronate HL manufactured by Nippon Polyurethane Industry Co., Ltd.) and 1 part by weight of allylsulfonium hexafluorophosphate (ESACURE 1064 manufactured by LAMBERTI Co., Ltd.) were blended relative to 100 parts by weight of the solid component of the graft polymer solution obtained in this manner, so as to prepare a pressure-sensitive adhesive solution.

The pressure-sensitive adhesive solution was applied onto one surface of a polyethylene terephthalate (PET) film ("S-10" manufactured by Toray Industries, Inc.) having a thickness of 25 µm so that the thickness of the pressure-sensitive adhesive layer after drying would be 20 µm. The resultant was dried at 120°C for 3 minutes to prepare a test sample, which was bonded to a PET separator (MRF-38 manufactured by Mitsubishi Resin Co., Ltd.) having been subjected to a silicone treatment and having a thickness of 38 µm.

### (Formation of pressure-sensitive adhesive layer)

### Sample for gel fraction measurement: 3A

Also, measurement of gel fraction was carried out without radiating light on the test sample 3A obtained in this manner, as a gel fraction without radiation of light.

### (Light radiation) 3B

Subsequently, a sample piece of 20 mm x 100 mm was cut out from the test sample 3A and was bonded onto an acrylic plate having a thickness of 2 mm ("Acrylite" manufactured by Mitsubishi Rayon Co., Ltd.) and a BA plate having a thickness of 0.4 mm (SUS430 steel plate surface-finished BA steel plate) by reciprocating with a roll of 2 kg once. The 180° peel adhering strength (peeling speed of 300 mm/min) of the bond was measured as an adhering strength without radiation of light. After light radiation was carried out at 1 J/cm² with a metal halide UV lamp on this, a dark reaction treatment (50°C, 48 hours) was carried out. The 180° peel adhering strength of this sample was measured as an adhering strength at the time of radiation with light.

### (Light radiation) 3C

After light radiation was carried out at 1 J/cm² with a metal halide UV lamp on the test sample 3A, a dark reaction treatment (50°C, 48 hours) was carried out. With this sample, the gel fraction was measured as a gel fraction at the time of radiation with light.

### Comparative Example 2

### (Preparation of acryl-based polymer)

An acryl-based polymer solution was prepared in the same manner as in Comparative Example 1.

### (Preparation of graft polymer)

The obtained acryl-based polymer solution was diluted with ethyl acetate so that the solid component would occupy 25%, so as to prepare a diluted solution (I). A four-neck flask equipped with a stirring blade, a thermometer, a nitrogen gas introduction tube, and a condenser was loaded with 10 parts of 4-hydroxybutyl acrylate glycidyl ether, 10 parts of isobornyl acrylate, and 0.1 parts of benzoyl peroxide relative to 400 parts by weight of the diluted solution (I). While the mixture was being moderately stirred, nitrogen gas was introduced to perform nitrogen substitution for 1 hour. Thereafter, polymerization reaction was carried out for 4 hours while keeping the liquid temperature within the flask around 60°C and subsequently at 70°C for 4 hours, so as to obtain a graft polymer solution.

### (Formation of pressure-sensitive adhesive layer)

### Sample for adhering strength measurement: 4A

Subsequently, 0.3 parts by weight of trimethylolpropane adduct of hexamethylene diisocyanate (Coronate HL manufactured by Nippon Polyurethane Industry Co., Ltd.) and 1 part by weight of allylsulfonium hexafluorophosphate (ESACURE 1064 manufactured by LAMBERTI Co., Ltd.) were blended relative to 100 parts by weight of the solid component of the graft polymer solution obtained in this manner, so as to prepare a pressure-sensitive adhesive solution.

The pressure-sensitive adhesive solution was applied onto one surface of a polyethylene terephthalate (PET) film ("S-10" manufactured by Toray Industries, Inc.) having a thickness of 25 µm so that the thickness of the pressure-sensitive adhesive layer after drying would be 20 µm. The resultant was dried at 120°C for 3 minutes to prepare a test sample, which was bonded to a PET separator (MRF-38 manufactured by Mitsubishi Resin Co., Ltd.) having been subjected to a silicone treatment and having a thickness of 38 µm.

### (Formation of pressure-sensitive adhesive layer)

### Sample for gel fraction measurement: 4A

Also, measurement of gel fraction was carried out without radiating light on the test sample 4A obtained in this manner, as a gel fraction without radiation of light.

### (Light radiation) 4B

Subsequently, a sample piece of 20 mm x 100 mm was cut out from the test sample and was bonded onto an acrylic plate having a thickness of 2 mm ("Acrylite" manufactured by Mitsubishi Rayon Co., Ltd.) and a BA plate having a thickness of 0.4 mm (SUS430 steel plate surface-finished BA steel plate) by reciprocating with a roll of 2 kg once. The 180° peel adhering strength (peeling speed of 300 mm/min) of the bond was measured as an adhering strength without radiation of light. After light radiation was carried out at 5 J/cm² with a metal halide UV lamp on this, a dark reaction treatment (50°C, 48 hours) was carried out. The 180° peel adhering strength of this sample was measured as an adhering strength at the time of radiation with light.

### (Light radiation) 4C

After light radiation was carried out at 5J/cm² with a metal halide UV lamp on the test sample 4A, a dark reaction treatment (50°C, 48 hours) was carried out. With this sample, the gel fraction was measured as a gel fraction at the time of radiation with light.

The result of evaluation of the adhering strength carried out on the samples obtained in the above examples and comparative examples is shown in Table 1.

**[Table 1]**

| | Tackiness (N/20 mm) | | | | | |
|---|---|---|---|---|---|---|
| | Acrylic plate | | | BA plate | | |
| | Light radiation amount | Before light radiation | After light radiation | Light radiation amount | Before light radiation | After light radiation |
| Example 1 | 1 J/cm² | 3.9 | 8.5 | 1 J/cm² | 3.5 | 8.2 |
| Example 2 | 1 J/cm² | 4.2 | 9 | 1 J/cm² | 3.7 | 8.6 |
| Comparative Example 1 | 1 J/cm² | 3.7 | 8.1 | 1 J/cm² | 3.4 | 8.0 |
| Comparative Example 2 | 1 J/cm² | 4 | 8.8 | 1 J/cm² | 3.6 | 8.7 |

In addition, the result of evaluation of the gel fraction of the pressure-sensitive adhesive layer carried out on the samples obtained in the above examples and comparative examples is shown in Table 2.

**[Table 2]**

| | Gel fraction (%) | | |
|---|---|---|---|
| | Light radiation amount | Before light radiation | After light radiation |
| Example 1 | 1 J/cm² | 38 | 84 |
| Example 2 | 1 J/cm² | 37 | 86 |
| Comparative Example 1 | 1 J/cm² | 41 | 83 |
| Comparative Example 2 | 1 J/cm² | 43 | 82 |

The heat resistance temperature of the pressure-sensitive adhesive layer measured by TMA on the samples obtained in the above examples and comparative examples is shown in Table 3.

**[Table 3]**

| | Heat resistance temperature (°C) | |
|---|---|---|
| | Light radiation amount | After light radiation |
| Example 1 | 1 J/cm² | 233 |
| Example 2 | 1 J/cm² | 237 |
| Comparative Example 1 | 1 J/cm² | 215 |
| Comparative Example 2 | 1 J/cm² | 218 |

## Claims

1. A photocurable pressure-sensitive adhesive composition, comprising:
a graft polymer comprising a (meth)acryl-based polymer containing 0.2 to 10% by weight of a hydroxyalkyl(meth)acrylamide monomer unit, and a chain that contains a cyclic ether group-containing monomer component and is graft-polymerized onto the (meth)acryl-based polymer; and
a cationic photopolymerization initiator.

2. The photocurable pressure-sensitive adhesive composition according to claim 1, wherein the graft polymer comprises the (meth)acryl-based polymer and a chain that has the cyclic ether group-containing monomer component and another monomer component and is graft-polymerized onto the (meth)acryl-based polymer.

3. The photocurable pressure-sensitive adhesive composition according to claim 1 or 2, further comprising a crosslinking agent.

4. The photocurable pressure-sensitive adhesive composition according to any one of claims 1 to 3, wherein the cyclic ether group-containing monomer is one or both of an epoxy group-containing monomer and an oxetane group-containing monomer.

5. The photocurable pressure-sensitive adhesive composition according to any one of claims 1 to 4, wherein the (meth)acryl-based polymer has a glass transition temperature of 250 K or less, wherein the glass transition temperature is determined based on the following Fox formula: 1/Tg=W1/Tg1+W2/Tg2+W3/Tg3+..., wherein Tg1, Tg2, Tg3, and so on each represent the glass transition temperature (expressed by absolute temperature) of each of homopolymers 1, 2, 3, and so on of the copolymerized components, and W1, W2, W3, and so on each represent the weight fraction of each copolymerized component.

6. The photocurable pressure-sensitive adhesive composition according to any one of claims 1 to 5, wherein the graft polymer is a product of graft polymerization of 100 parts by weight of the (meth)acryl-based polymer, 2 to 50 parts by weight of the cyclic ether group-containing monomer and 5 to 50 parts by weight of another monomer, in the presence of 0.02 to 5 parts by weight of a peroxide.

7. The photocurable pressure-sensitive adhesive composition according to any one of claims 1 to 6, wherein the cationic photopolymerization initiator is at least one selected from the group consisting of an allylsulfonium hexafluorophosphate salt, a sulfonium hexafluorophosphate salt, and bis(alkylphenyl)iodonium hexafluorophosphate.

8. A photocurable pressure-sensitive adhesive layer, comprising a crosslinking product of the photocurable pressure-sensitive adhesive composition according to any one of claims 1 to 7.

9. A photocurable pressure-sensitive adhesive sheet, comprising:
a support; and
the photocurable pressure-sensitive adhesive layer according to claim 8 formed on at least one side of the support.

10. A method for producing the photocurable pressure-sensitive adhesive composition according to any one of claims 1 to 7, comprising the steps of:
preparing a (meth)acryl-based polymer and then graft-polymerizing a cyclic ether group-containing monomer and optionally another monomer onto the (meth)acryl-based polymer to prepare a graft polymer; and
mixing a cationic photopolymerization initiator with the graft polymer.

11. The method according to claim 10, wherein in the step of preparing a graft polymer, preparing the (meth)acryl-based polymer is followed by graft-polymerizing a cyclic ether group-containing monomer and another monomer onto the (meth)acryl-based polymer.

## Patentansprüche

1. Fotohärtbare Haftklebezusammensetzung, umfassend:
ein Pfropfpolymer, umfassend ein (Meth)acryl-basiertes Polymer, das 0,2 bis 10 Gew.% einer Hydroxyalkyl(meth)acrylamid-Monomereinheit enthält, und eine Kette, die eine eine cyclische Ethergruppe enthaltende Monomerkomponente enthält und auf das (Meth)acryl-basierte Polymer pfropfpolymerisiert ist; und
einen kationischen Fotopolymerisationsinitiator.

2. Fotohärtbare Haftklebezusammensetzung gemäß Anspruch 1, worin das Pfropfpolymer das (Meth)acryl-basierte Polymer und eine Kette umfasst, die eine eine cyclische Ethergruppe enthaltende Monomerkomponente und eine andere Monomerkomponente aufweist, und die auf das (Meth)acryl-basierte Polymer pfropfpolymerisiert ist.

3. Fotohärtbare Haftklebezusammensetzung gemäß Anspruch 1 oder 2, ferner umfassend ein Vernetzungsmittel.

4. Fotohärtbare Haftklebezusammensetzung gemäß irgendeinem der Ansprüche 1 bis 3, worin das die cyclische Ethergruppe enthaltende Monomer eines oder beides von einem Epoxygruppe-haltigen Monomer und einem Oxetangruppe-haltigen Monomer ist.

5. Fotohärtbare Haftklebezusammensetzung gemäß irgendeinem der Ansprüche 1 bis 4, worin das (Meth)acryl-basierte Polymer eine Glasübergangstemperatur von 250 K oder niedriger aufweist, worin die Glasübergangstemperatur bestimmt wird auf Grundlage der folgenden Fox-Gleichung: 1/Tg=W1/Tg1+W2/Tg2+W3/Tg3+..., worin Tg1, Tg2, Tg3 usw. jeweils die Glasübergangstemperatur (ausgedrückt als absolute Temperatur) von jedem der Homopolymere 1, 2, 3 usw. der copolymerisierten Komponenten darstellen, und W1, W2, W3 usw. jeweils den Gewichtsanteil von jeder copolymerisierten Komponente darstellen.

6. Fotohärtbare Haftklebezusammensetzung gemäß irgendeinem der Ansprüche 1 bis 5, worin das Pfropfpolymer ein Produkt einer Pfropfpolymerisation von 100 Gew.-Teilen des (Meth)acryl-basierten Polymers, 2 bis 50 Gew.-Teilen des die cyclische Ethergruppe enthaltenden Monomers und 5 bis 50 Gew.-Teilen eines anderen Monomers in der Gegenwart von 0,02 bis 5 Gew.-Teilen eines Peroxids ist.

7. Fotohärtbare Haftklebezusammensetzung gemäß irgendeinem der Ansprüche 1 bis 6, worin der kationische Fotopolymerisationsinitiator mindestens einer ist, der ausgewählt ist aus der Gruppe, bestehend aus einem Allylsulfoniumhexafluorphosphatsalz, einem Sulfoniumhexafluorphosphatsalz und Bis(alkylphenyl)jodoniumhexafluorphosphat.

8. Fotohärtbare Haftklebeschicht, umfassend ein Vernetzungsprodukt der fotohärtbaren Haftklebezusammensetzung gemäß irgendeinem der Ansprüche 1 bis 7.

9. Fotohärtbares Haftklebeblatt, umfassend:
einen Träger; und
die fotohärtbare Haftklebeschicht gemäß Anspruch 8, gebildet auf zumindest einer Seite des Trägers.

10. Verfahren zur Herstellung der fotohärtbaren Haftklebezusammensetzung gemäß irgendeinem der Ansprüche 1 bis 7, umfassend die Schritte:
Zubereiten eines (Meth)acryl-basierten Polymers und dann Pfropfpolymerisieren eines eine cyclische Ethergruppe enthaltenden Monomers und optional eines anderen Monomers auf das (Meth)acryl-basierte Polymer, um ein Pfropfpolymer herzustellen; und
Mischen eines kationischen Fotopolymerisationsinitiators mit dem Pfropfpolymer.

11. Verfahren gemäß Anspruch 10, worin in dem Schritt der Herstellung des Pfropfpolymers dem Zubereiten des (Meth)acryl-basierten Polymers die Pfropfpolymerisation eines eine cyclische Ethergruppe enthaltenden Monomers und eines anderen Monomers auf das (Meth)acryl-basierte Polymer folgt.

## Revendications

1. Composition adhésive photodurcissable sensible à la pression, comprenant :
un polymère greffé renfermant un polymère à base (méth)acrylique contenant 0,2 à 10 % en poids d'un motif monomère d'hydroxyalkyl(méth)acrylamide, et une chaîne qui contient un composant monomère contenant un groupe éther cyclique, et qui est polymérisée par greffage sur le polymère à base (méth)acrylique ; et
un initiateur de photopolymérisation cationique.

2. Composition adhésive photodurcissable sensible à la pression selon la revendication 1, dans laquelle le polymère greffé comprend le polymère à base (méth)acrylique et une chaîne, qui contient le composant monomère contenant un groupe éther cyclique et un autre composant monomère et qui est polymérisée par greffage sur le polymère à base (méth)acrylique.

3. Composition adhésive photodurcissable sensible à la pression selon la revendication 1 ou 2, comprenant en outre un agent réticulant.

4. Composition adhésive photodurcissable sensible à la pression selon l'une quelconque des revendications 1 à 3, dans laquelle le monomère contenant un groupe éther cyclique est soit un monomère contenant un groupe époxy soit un monomère contenant un groupe oxétane, ou les deux.

5. Composition adhésive photodurcissable sensible à la pression selon l'une quelconque des revendications 1 à 4, dans laquelle le polymère à base (méth) acrylique possède une température de transition vitreuse de 250 K ou moins, la température de transition vitreuse étant déterminée sur la base de la formule de Fox suivante : 1/Tg=W1/Tg1+W2/Tg2+W3/Tg3+..., dans laquelle Tg1, Tg2, Tg3, etc. représentent chacun la température de transition vitreuse (exprimée en température absolue) de chacun des homopolymères 1, 2, 3, etc. des composants copolymérisés, et W1, W2, W3, etc. représentent chacun la fraction en poids de chaque composant copolymérisé.

6. Composition adhésive photodurcissable sensible à la pression selon l'une quelconque des revendications 1 à 5, dans laquelle le polymère greffé est un produit de la polymérisation par greffage de 100 parties en poids du polymère à base (méth) acrylique, de 2 à 50 parties en poids du monomère contenant un groupe éther cyclique et de 5 à 50 parties en poids d'un autre monomère, en présence de 0,02 à 5 parties en poids d'un peroxyde.

7. Composition adhésive photodurcissable sensible à la pression selon l'une quelconque des revendications 1 à 6, dans laquelle l'initiateur de photopolymérisation cationique est au moins un élément choisi dans le groupe constitué d'un sel d'hexafluorophosphate d'allylsulfonium, d'un sel d'hexafluorophosphate de sulfonium, et d'un hexafluorophosphate de bis(alkylphényl)iodonium.

8. Couche adhésive photodurcissable sensible à la pression, comprenant un produit de réticulation de la composition adhésive photodurcissable sensible à la pression selon l'une quelconque des revendications 1 à 7.

9. Feuille adhésive photodurcissable sensible à la pression, comprenant :
un support ; et
la couche adhésive photodurcissable sensible à la pression selon la revendication 8, formée sur au moins une face du support.

10. Procédé de production de la composition adhésive photodurcissable sensible à la pression selon l'une quelconque des revendications 1 à 7, comprenant les étapes consistant à :
préparer un polymère à base (méth)acrylique et puis polymériser par greffage un monomère contenant un groupe éther cyclique et éventuellement un autre monomère sur le polymère à base (méth)acrylique pour préparer un polymère greffé ; et
mélanger un initiateur de photopolymérisation cationique avec le polymère greffé.

11. Procédé selon la revendication 10, dans lequel au cours de l'étape consistant à préparer un polymère greffé, la préparation du polymère à base (méth)acrylique est suivie de la polymérisation par greffage d'un monomère contenant un groupe éther cyclique et éventuellement d'un autre monomère sur le polymère à base (méth)acrylique.
